# EUROPEAN PATENT APPLICATION

(11) **EP 4 553 007 A1**
(43) Date of publication of application: **14.05.2025**
(21) Application number: 23209261.9
(22) Date of filing: 10.11.2023
(51) Int. Cl.: B65G 1/04

(54) **A CONTAINER HANDLING VEHICLE WITH ALL WHEEL DRIVE**

(71) Applicant: AUTOSTORE TECHNOLOGY AS, 5578 Nedre Vats (NO)
(72) Inventor: Håkon Pløen, Christian, 5578 Nedre Vats (NO)
(74) Representative: Jarrett, Daniel Phillip

(57) **Abstract**

A container handling vehicle (601) for operation on a rail system (108) of an automated storage and retrieval system (1) comprises: a first set of wheels (601b) for driving in a first direction (X) and a second set of wheels (601c) for driving in a second direction (Y); wherein each of the first set of wheels (601b) and the second set of wheels (601c) comprises a respective first pair of wheels (601b',601c') on a common side of the vehicle and a respective second pair of wheels (601b",601c") on a common side of the vehicle, and each first and second pair of wheels (601b',601c',601b",601c") is driven by a respective common force transferring element (606';606";607';607"); and wherein the container handling vehicle (601) comprises a wheel motor arrangement and wherein each of the force transferring elements (606';606";607';607") is connected to the wheel motor arrangement.

## Description

The invention relates to the technical field of automated storage and retrieval systems (ASRS), and in particular to the type of ASRS with a rail system on top where container handling vehicles operate. Storage containers are stacked one on top of another below the rail system and the container handling vehicles lift the storage containers from above.

### BACKGROUND AND PRIOR ART

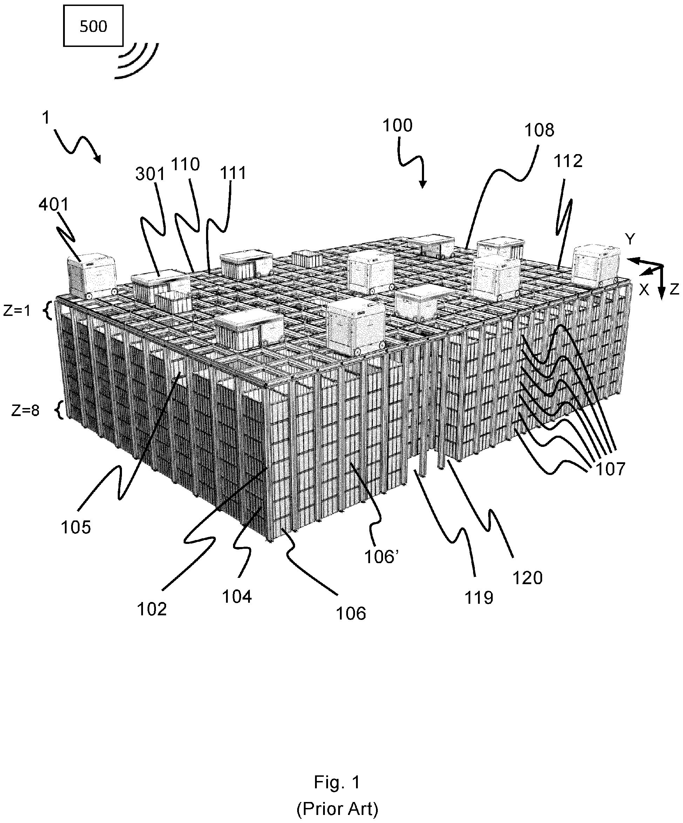

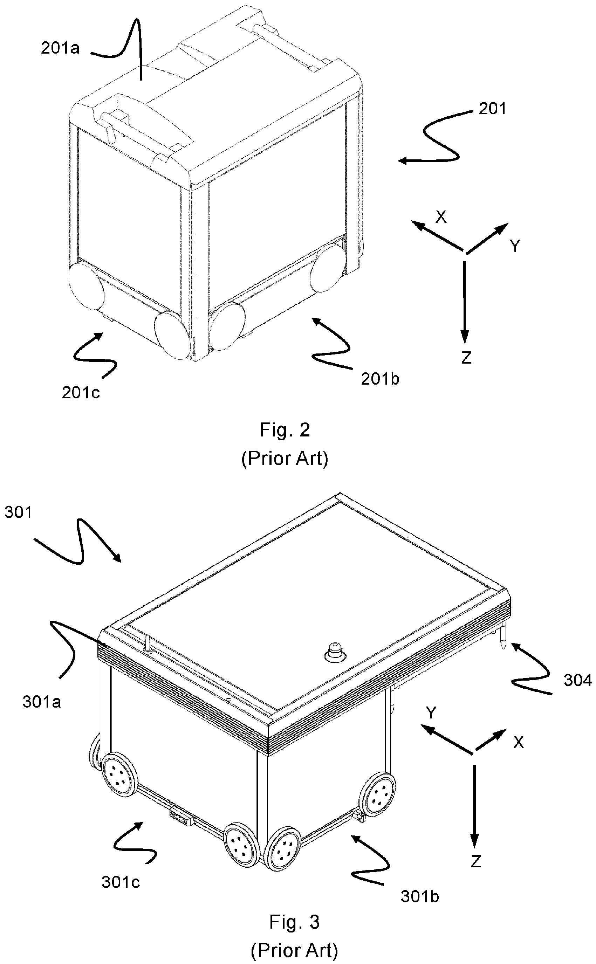

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the framework structure 100, and a second set of parallel rails 111 arranged perpendicular to the first set of rails 110 to guide movement of the container handling vehicles 201,301,401 in a second direction *Y* which is perpendicular to the first direction *X.* Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the Y direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

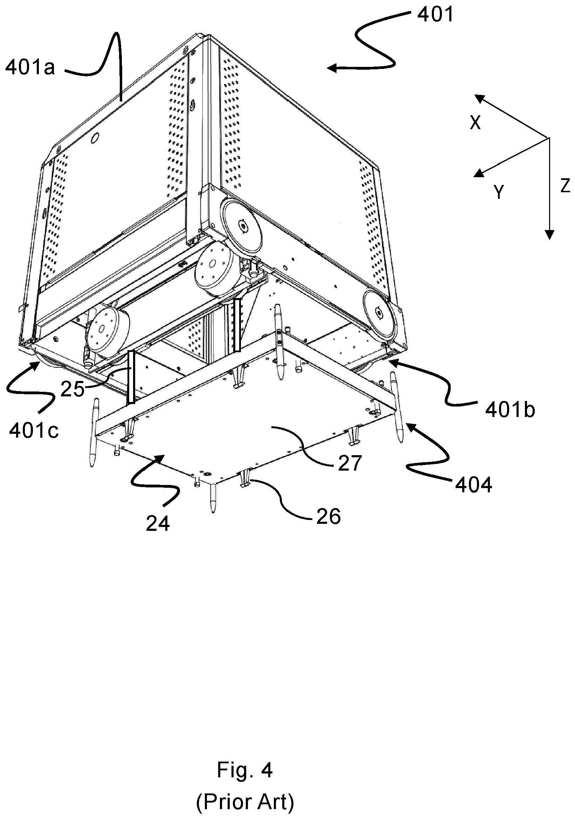

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1*, Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y*-direction, while each storage cell may be identified by a container number in the *X-, Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2O15/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2O15/193278A1, the contents of which are incorporated herein by reference. The term `lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

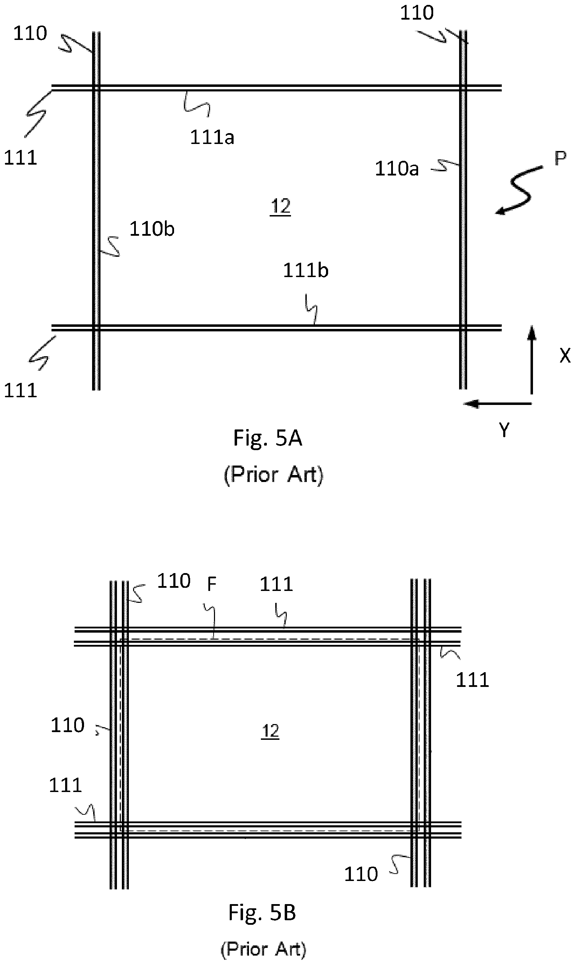

The rail system 108 may be a single-track system, as shown in Fig. 5A. Preferably, the rail system 108 is a double-track system, as shown in Fig. 5B, thus allowing a container handling vehicle having a footprint F generally corresponding to the lateral extension of a grid column 12 to travel along a row of grid columns in either a first direction X or a second direction Y even if another container handling vehicle is positioned above a grid column 12 adjacent to that row.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

### SUMMARY OF THE INVENTION

The present invention is set forth and characterized in the independent claims, while the dependent claims describe other optional features.

An advantage of the invention is the possibility of increased acceleration and deceleration of the container handling vehicle operating on the rail system.

The present invention relates to a container handling vehicle for operation on a rail system of an automated storage and retrieval system, the container handling vehicle comprising:
a first section, a second section and a third section arranged in a line side-by-side, wherein the first section and the third section are arranged on opposite sides of the second section;
a first set of wheels for driving in a first direction and a second set of wheels for driving in a second direction, the second direction being perpendicular to the first direction;
wherein each of the first set of wheels and the second set of wheels comprises a first pair of wheels and a second pair of wheels, and wherein the first pair of wheels and the second pair of wheels of the first and second set of wheels, respectively, are arranged on opposite sides of the second section, and each first and second pair of wheels is driven by a respective force transferring element;
wherein the container handling vehicle comprises a wheel motor arrangement which comprises at least one wheel motor arranged in the first section, wherein each of the force transferring elements is connected to the wheel motor arrangement.

In other words, the wheels of one pair of wheels are connected to each other and are driven by the same wheel motor (and force transferring element). By having a total of four pair of wheels, i.e. the first and second pair of wheels of the first set of wheels and the first and second pair of wheels of the second set of wheels, connected to respective force transferring elements and wheel motor arrangement, all wheel drive is achieved.

Each of the pair of wheels preferably comprises at least two wheels. As such, all wheel drive in both the first direction and the second direction is obtained.

The wheels in the first pair of wheels of the first set of wheels is arranged in a vertical plane on one side of the container handling vehicle, and the second pair of wheels of the first set of wheels is arranged in a vertical plane on an opposite side of the second section. The same applies to the first and second pair of wheels in the second set of wheels.

The force transferring element can be a drive belt. Alternatively, the force transferring element can be a drive chain, rope or similar. The force transferring element is preferably endless.

The second section may comprise a cavity and a lifting device for lifting and lowering of a storage container into the cavity.

The lifting device may comprise a lifting frame suspended by lifting bands.

The container handling may be formed of a first chassis for mounting of the first set of wheels and a second chassis for mounting of the second set of wheels.

All the wheels of all of the pair of wheels are preferably fixed in position with respect to the chassis they are mounted on.

The second chassis may be arranged inside the first chassis.

The first chassis may have a longer extension in the first direction than the second chassis, and the respective first section and the third section may be formed between the first chassis and the second chassis.

The first chassis and the second chassis may be movable relative to each other in a vertical direction.

The wheel lift mechanism may be connected to the first chassis or the second chassis.

The wheel motor assembly may comprise four wheel motors, wherein two of the wheel motors may be arranged in the first section and two of the wheel motors may be arranged in the third section.

The wheel motor for driving the first pair of wheels of the first set of wheels may comprise a motor shaft and the wheel motor for driving the first pair of wheels of the second set of wheels may comprise a motor shaft, wherein the motor shafts may be arranged perpendicular to each other.

The motor shafts may be arranged in the first section.

Similarly, the wheel motor for driving the second pair of wheels of the first set of wheels may comprise a motor shaft and the wheel motor for driving the second pair of wheels of the second set of wheels may comprise a motor shaft, wherein the motor shafts may be arranged perpendicular to each other. The motor shafts may be arranged in the third section.

The motor shaft for the wheel motor which drives the first pair of wheels of the first set of wheels may be connected to a side part of the first section and may extend through the side part and to an outside of the first section.

Similarly, the motor shaft for the wheel motor which drives the second pair of wheels of the first set of wheels may be connected to a side part of the third section and may extend through the side part and to an outside of the third section.

The wheels in the first and second set of wheels in the first set of wheels are also arranged outside of the first and third sections. The wheels can be mounted on short axles extending through the side parts and the short axles and the wheels follow any vertical movement of the side part that they are mounted to.

The first and second pair of wheels are thus on an opposite side of the side part compared to the wheel motors driving the respective first and second pair of wheels, while the respective motor shaft connects the respective wheel motor to the pair of wheels. It means that each pair of wheels can be a simple two wheel drive arrangement, where a motor is driving a force transferring element which is driving a pair of wheels. The wheels with the force transferring element is on one side of the side part, the wheel motor mounted on the other. The mass will be balanced on either side of that side part.

The wheel of the wheel assembly may comprise a wheel rim and a tyre arranged or moulded on the wheel rim.

The wheels in a pair of wheels, together with the motor shaft and force transferring element for the respective pair of wheels, form a wheel assembly. The wheels are formed of a tyre and a wheel pulley. The width of the wheel is thus the total axial width of the wheel pulley and the tyre of one of the wheels in the wheel assembly.

One of the wheels in the first pair of wheels of the first set of wheels may be supported at the first section and another of the wheels in the first pair of wheels of the first set of wheels may be supported at the third section, and the force transferring element driving the first pair of wheels of the first set of wheels may be connected to the motor shaft on the outside of the first section.

Similarly, one of the wheels in the second pair of wheels of the first set of wheels may be supported at the first section and another of the wheels in the second of wheels of the first set of wheels may be supported at the third section, and the force transferring element driving the second pair of wheels of the first set of wheels may be connected to the motor shaft on the outside of the third section.

The power source may be arranged in the first section or in the third section.

The power source can be a battery.

The first section has a footprint, the second section has a footprint, and a size ratio of the footprint of the second section relative to the footprint of the first section may be at least 2:1.

The wheel lift mechanism may be fixedly connected to the first chassis or the second chassis. As such, only one of the first chassis or the second chassis is lifted and lowered when changing direction of travel between the first direction and the second direction. Thus, less powerful motor may be used for performing changing direction of travel making a cheaper and simpler container handling vehicle with less power consumption.

The present invention also relates to an automated storage and retrieval system for storage containers, the storage system comprising a framework structure and a container handling vehicle as defined above, wherein the framework structure comprises a rail system having a first set of parallel rails and a second set of parallel rails arranged perpendicular to the first set of rails;
the container handling vehicle comprises at least two wheel assemblies, each of the wheel assemblies comprising one of the pair of wheels and a wheel pulley on each wheel of the pair of wheels for driving by the force transferring element; each rail of the first set of rails has two sidewalls defining a width of the rail and comprises two parallel tracks, wherein two adjacent rails of the first set of rails provide tracks for accommodating the first and second pair of wheels of the first set of wheels; and wherein the wheel assembly has a width being equal to or smaller than half the width of the rail.

The width is the total axial width of the wheel pulley and a tyre of one of the wheels in the wheel assembly. Furthermore, the axial width of the tyre and wheel width radially outwardly of the wheel pulley on the wheel assembly is up to half the width of the rail. That is, the wheel width occupies half the width and the wheel pulley occupies half the width of half the width of the rail.

The wheel pulley is side-by-side with each of the wheels in the pair of wheels and the force transferring element is connected to the wheel pulley of each of the wheels in a pair of wheels.

Optionally, such wheel assemblies may be used for the first and second pair of wheels in the first set of wheels as well, however that is not of equal importance as provided that the wheel assemblies do not occupy any of the cavity since the wheel and/or force transferring element may extend into the respective first or third section instead.

The parallel tracks are on an upper surface of the rails. Each track is defined by two opposite sidewalls. The tracks extend along the length of the rail.

The wheel of the wheel assembly may have a width being equal to or smaller than half the width of the track. The wheel of the wheel assembly may comprise an inclined side portion for guidance by a respective inclined portion of one of the sidewalls of the tracks.

The force transferring element may be arranged within the width of the wheel assembly.

The method may comprise the steps of:
- operating at least one of the wheel motors of the wheel motor arrangement for driving the respective force transferring elements connected to the first and second pair of wheels of the first set of wheels in the first direction, and
- operating at least one of the wheel motors of the wheel motor arrangement for driving the respective force transferring elements connected to the first and second pair of wheels of the second set of wheels in the second direction.

By operating the container handling vehicle according to this method, all wheels of the container handling vehicle are driven.

The automated storage and retrieval system may comprise a plurality of upright members and each storage column is defined by four of the upright members.

The rail system may be arranged on top of the upright members, the rail system comprising a first set of parallel rails and a second set of parallel rails arranged perpendicular to the first set of rails. The first and second set of rails providing a horizontal grid-based rail system defining a plurality of grid cells. The first and second set of rails of the rail system may comprise one or two tracks. Preferably both directions of rail comprise two tracks (double tracks), e.g., either as two parallel channels formed in a rail, or as a channel provided in each of a pair of rail members that have been fastened to the other to form a rail. In such arrangements the access opening (also named grid opening) and a track-width on each side defines the "grid cell". In arrangements where one direction of rails has only a single track, the grid cell may extend a full rail-width on those sides.

In the present specification the term "storage container" is intended to mean any goods holder unit having a bottom plate and side portions suitable for releasable connection to the container lift device, e.g. a bin, a tote, a tray or similar. The side portions may preferably comprise gripping recesses. The side portions are preferably sidewalls. The height of the sidewalls may vary depending on the intended use of the automated storage and retrieval system and the goods to be stored. The gripping recesses may be arranged at an upper rim of the sidewalls. The outer horizontal periphery of the storage container is preferably rectangular.

For monitoring and controlling the vehicles, e.g. monitoring and controlling the location of the vehicles, the content of each storage container, and the movement of the vehicles such that a desired storage container can be delivered to the desired location at the desired time without vehicles colliding with each other, the automated storage and retrieval system comprises a control system which typically is computerized and which typically comprises a database for keeping track of the storage containers.

The relative terms "upper", "lower", "below", "above", "higher" etc. shall be understood in their normal sense and as seen in a cartesian coordinate system.

The invention may be used in connection with storage containers and systems as described above. However, other areas where the disclosed automated storage and retrieval system and methods may be used is within vertical farming, micro-fulfilment or grocery/e-grocery.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system;
Fig. 2 is a perspective view of a prior art container handling vehicle having an internally arranged cavity for carrying storage containers therein;
Fig. 3 is a perspective view of a prior art container handling vehicle having a cantilever for carrying storage containers underneath;
Fig. 4 is a perspective view, seen from below, of a prior art container handling vehicle having an internally arranged cavity for carrying storage containers therein;
Figs. 5A is a top side schematic view of a rail systems for use in the storage system in Fig. 1 where each rail has one track;
Fig. 5B is a top side schematic view of a rail systems for use in the storage system in Fig. 1 where each rail has a double track;
Fig. 5C is a more detailed view of the double track rail system in Fig. 5B;
Fig. 6A is a side perspective view of a container handling vehicle according of the invention;
Fig. 6B is a top view of the container handling vehicle in Fig. 6A;
Fig. 7 shows an example of a first chassis of the container handling vehicle in Figs. 6A and 6B for driving in a first direction on a rail system;
Fig. 8A shows an example of a second chassis of the container handling vehicle in Figs. 6A and 6B for driving in a second direction on a rail system, when not carrying a storage container;
Fig. 8B shows an example of the second chassis of the container handling vehicle in Figs. 6A and 6B, when carrying a storage container;
Fig. 9A is a side perspective view of four wheel assemblies and respective wheel motors of a wheel motor arrangement of the container handling vehicle in Figs. 6A and 6B;
Fig. 9B is a top view of Fig. 9A illustrating the positions of the wheel motors of the wheel motor arrangement in respective first and third sections of the container handling vehicle;
Fig. 10A is a side view, seen along a first direction of the rail system, of one wheel of a wheel assembly of a first pair of wheels of the first set of wheels of the container handling vehicle in Figs. 6A and 6B;
Fig. 10B is a side perspective view of the wheel assembly in Fig. 10A;

### DETAILED DESCRIPTION OF THE INVENTION

In overview, a container handling vehicle comprises a first set of wheels (601b) for driving in a first direction (X) and a second set of wheels (601c) for driving in a second direction (Y). Each of the first set of wheels (601b) and the second set of wheels (601c) comprises a respective first pair of wheels (601b',601c') on a common side of the vehicle and a respective second pair of wheels (601b",601c") on a common side of the vehicle, and each first and second pair of wheels (601b',601c',601b",601c") is driven by a respective common force transferring element (606';606";607';607"). As a result an all-wheel drive is achieved by driving each pair of wheels (for example two pairs per set) commonly, with simplified control and providing improvement in terms of e.g. acceleration/deceleration, driving speed, lifting speed etc, with improved performance and stability of the vehicles operating on the rail system. By driving pairs on the same side of the vehicle, that is to say, each wheel in the pair is provided on a common ide of the vehicle or in a common vertical plane, improved positioning of the motor is available for enhancing the inertial behaviour of the vehicle.

and increased acceleration when moving in both the first direction X and the second direction Y on the rail system.

In the following, embodiments of the invention will be discussed in more detail with reference to the appended drawings. It should be understood, however, that the drawings are not intended to limit the invention to the subject-matter depicted in the drawings.

A framework structure 100 of the automated storage and retrieval system 1 may be constructed in a similar manner to the prior art framework structure 100 described above in connection with Figs. 1-3. That is, the framework structure 100 may comprise a number of upright members 102, and comprise a first, upper rail system 108 extending in the X direction and Y direction.

The prior art framework structure 100 may further comprise storage compartments in the form of storage columns 105 provided between the members 102 wherein storage containers 106 may be stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700×700 columns and a storage depth of more than twelve containers.

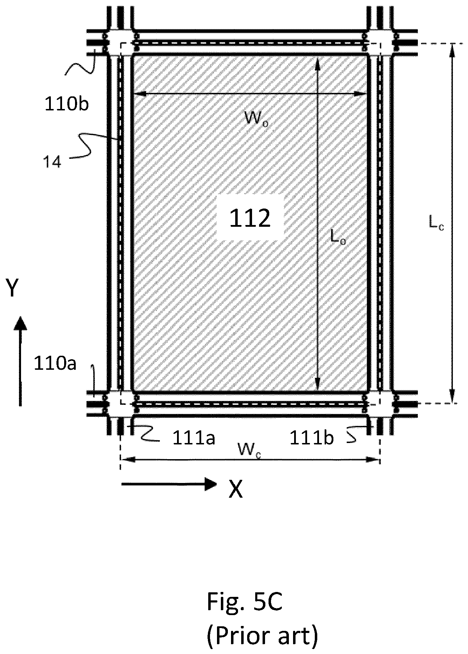

Fig. 5C is a more detailed view of the double track rail system in Fig. 5B.

The rail system/track system 110 forms a grid structure or grid pattern in the horizontal plane P. The grid 1 comprises a plurality of rectangular and uniform grid locations or grid cells 14, where each grid cell 14 comprises an access opening 112 which is delimited by a pair of tracks 110a, 110b of the first set of tracks 110 and a pair of tracks 111a, 111b of the second set of tracks 111. The tracks 110a,110b,111a,111b form a rail system 108 on which the container handling vehicle(s) operate. In Fig. 5C, the grid cell 14 is indicated by a dashed box and the access opening 112 is indicated by a hatched area.

Consequently, tracks 110a and 110b form pairs of tracks defining parallel rows of grid cells running in the first direction X, and tracks 111a and 111b form pairs of tracks defining parallel rows of grid cells running in the second direction X.

Each grid cell 14 has a width W_{c} which is typically within the interval of 30 to 150 cm, and a length L_{c} which is typically within the interval of 50 to 200 cm. Each access opening 112 has a width Wₒ and a length Lₒ which is typically 2 to 10 cm less than the width W_{c}, and the length L_{c}, respectively, of the grid cell 14.

In the first direction X and the second directions Y, neighboring grid cells are arranged in contact with each other such that there is no space there-between.

In the track system shown in Fig. 5C, each horizontal member making up the tracks 110a, 110b; 111a, 111b comprises two tracks. Consequently, each horizontal member is capable of accommodating two wheels in parallel. In such a track system, the borders between neighboring grid cells run along the centre-line of the horizontal members, as is indicated in Fig. 5C.

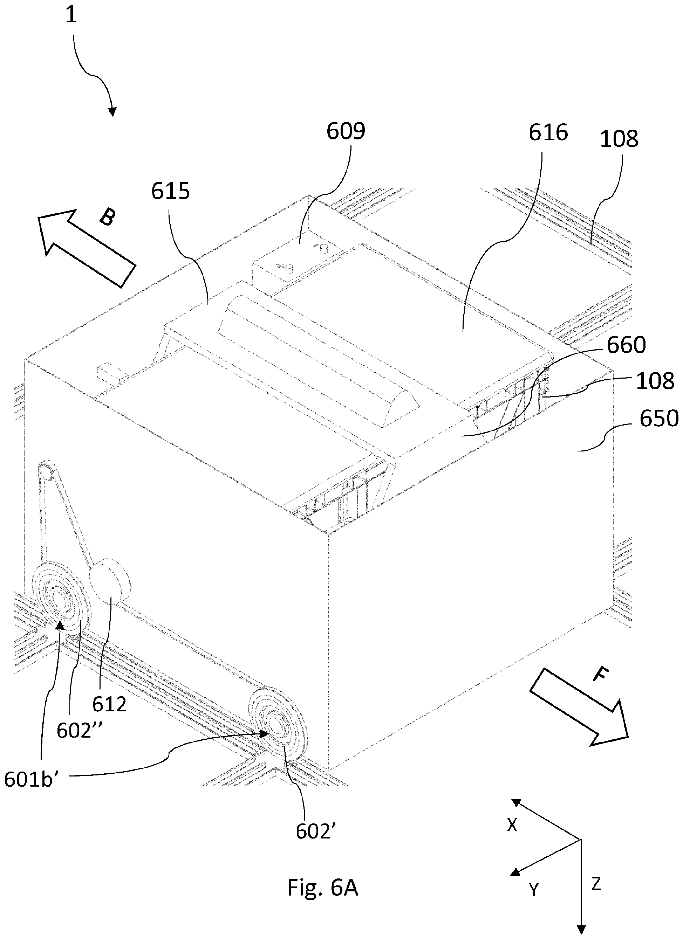

Fig. 6A is a side perspective view of a container handling vehicle 601 according of the invention.

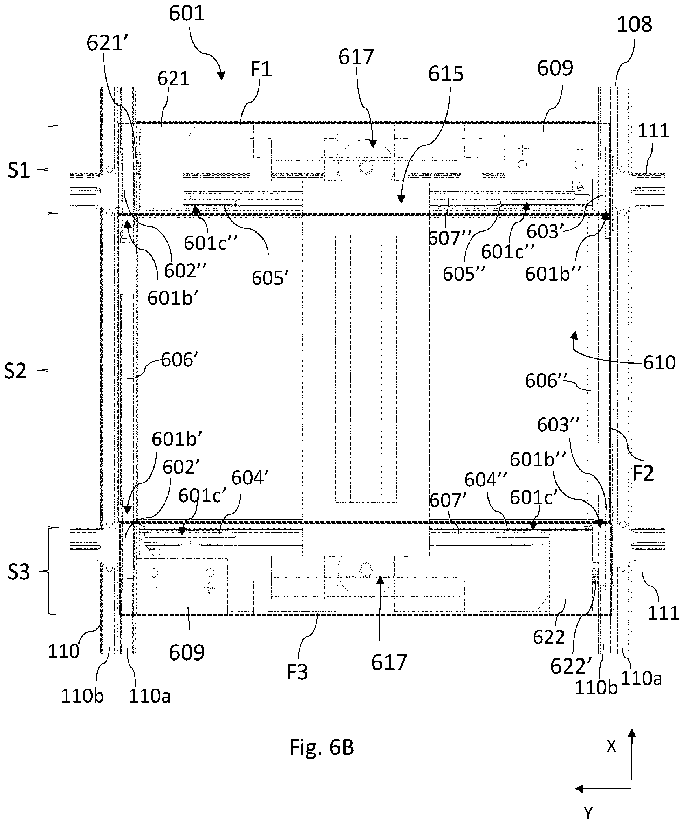

Fig. 6B is a top view of the container handling vehicle 601 in Fig. 6A.

Referring to Figs. 6A and 6B, the container handling vehicle 601 features a first section S1, a second section S2 and a third section S3 arranged in a line side-by-side. As seen in Fig. 6B, the first section S1 and the third section S3 are arranged on opposite sides of the second section S2.

In the illustrated example, the second section S2 is substantially of similar size as a grid cell 14. A lifting device 615, and associated lifting frame 616, is arranged in an upper end of the second section S2. A cavity is formed below the lifting frame 616 for accommodating a storage container 106. The first section S1 and the third section S3 are shown as being of substantially the same size. Both the first and third sections S1,S3 are smaller than the second section S2. A size ratio of the footprint F2 of the second section S2 relative to the footprint F1 of the first section S1 is at least 2:1. Similarly, a size ratio of the footprint F2 of the second section S2 relative to the footprint F3 of the third section S3 is at least 2:1. The first section S1 and the third section S3 accommodate, i.a a power source 609 (e.g. a battery 609) and a wheel lift mechanism 617.

The container handling vehicle 601 comprises a first set of wheels 601b for driving in a first direction X on top of the rail system 108, and a second set of wheels 601c for driving in a second direction Y on top of the rail system 108. The second direction Y is perpendicular to the first direction X.

The first set of wheels 601b comprises a first pair of wheels 601b' arranged on one side of the second section S2 and a second pair of wheels 601b" arranged on an opposite side of the second section S2. The first pair of wheels 601b' comprises a first wheel 602' and a second wheel 602". The first and second wheels 602',602" are driven by a force transferring element 606' in the form of a drive belt. The first wheel 602' is supported at the first section S1 and is arranged on an outside of the first section, and the second wheel 602" is supported at the third section S3 and is arranged on an outside of the third section S3 in the same vertical plane as the first wheel 602'. The force transferring element 606' is arranged outside the first, second and third sections S1, S2, S3. A motor arrangement comprising a wheel motor 621 for driving the first pair of wheels 601b' is arranged in the first section S1. A motor shaft 621' of the wheel motor 621 extends to an outside of the first section S1 for driving the force transferring element 606' (and thus the first and second wheels 602',602"). Since the force transferring element 606' is connected to both wheels 602',602", two wheel-drive on the side of the container handling vehicle where the first pair of wheels 601b' of the first set of wheels 601b is arranged, is obtained.

The first set of wheels 601b comprises a second pair of wheels 601b" arranged on an opposite side of the second section S2 compared to the first pair of wheels 601b'. The second pair of wheels 601b" comprises a first wheel 603' and a second wheel 603". The first and second wheels 603',603" are driven by a force transferring element 606". The first wheel 603' is supported at the first section S1 and is arranged on an outside of the first section, and the second wheel 603" is supported at the third section S3 and is arranged on an outside of the third section S3 in the same vertical plane as the first wheel 603'. The force transferring element 606" is arranged outside the first, second and third sections S1, S2, S3. A motor arrangement comprising a wheel motor 622 for driving the second pair of wheels 601b' is arranged in the third section S3. A motor shaft 622' of the wheel motor 622 extends to an outside of the third section S3 for driving the force transferring element 606" (and thus the first and second wheels 603',603"). Since the force transferring element 606" is connected to both wheels 603',603" on the side of the container handling vehicle where the second pair of wheels 601b" of the first set of wheels 601b is arranged, is obtained.

Since both sides of the container handling vehicle 601 have two wheel-drive in the first direction X, the container handling vehicle 601 has all-wheel drive (i.e. four-wheel drive in the illustrated embodiment) in the first direction X.

The second set of wheels 601c comprises a first pair of wheels 601c' arranged on one side of the second section S2 and a second pair of wheels 601c" arranged on an opposite side of the second section S2. The first pair of wheels 601c' comprises a first wheel 604' and a second wheel 604". The first and second wheels 604',604" are driven by a force transferring element 607'. The first wheel 604' and the second wheel 604" are arranged in the same vertical plane and are arranged in the third section S3. The first and second wheels 604',604" being supported by a side part separating the second section S2 and the third section S3.

The force transferring element 607' is also arranged in the third section S3.

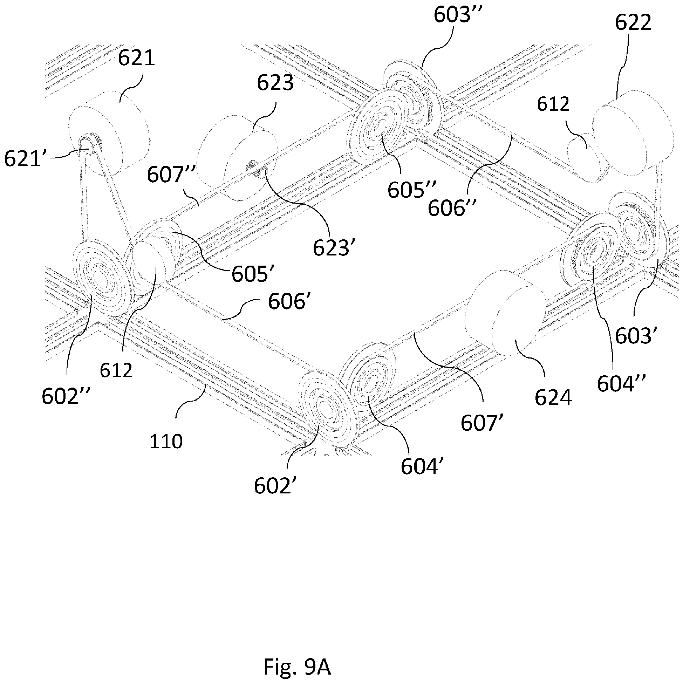

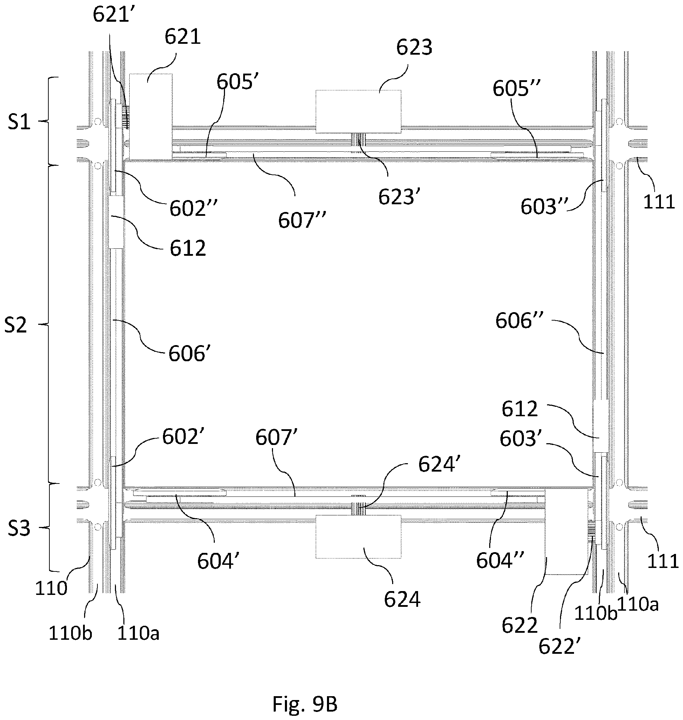

A motor arrangement comprising a wheel motor 624 and a motor shaft 624' of the wheel motor 624 (not shown in Fig. 6B, see e.g. Figs. 9A or 9B) for driving the first pair of wheels 601c' is arranged in the third section S3. The force transferring element 607' is driven by the motor shaft 624'.

Since the force transferring element 607' is connected to both wheels 604',604", two wheel-drive on the side of the container handling vehicle where the first pair of wheels 601c' of the second set of wheels 601c is arranged, is obtained.

The second set of wheels 601c comprises a second pair of wheels 601c" arranged on an opposite side of the second section S2 compared to the first pair of wheels 601c'. The second pair of wheels 601c" comprises a first wheel 605' and a second wheel 605". The first and second wheels 605',605" are driven by a force transferring element 607". The first wheel 605' and the second wheel 605" are arranged in the same vertical plane and are arranged in the first section S1. The first and second wheels 605',605" being supported by a side part separating the second section S2 and the first section S1.

The force transferring element 607" is also arranged in the first section S1.

A motor arrangement comprising a wheel motor 623 and a motor shaft 623' of the wheel motor 623 (not shown in Fig. 6B, see e.g. Figs. 9A or 9B) for driving the second pair of wheels 601c" is arranged in the first section S1. The force transferring element 607" is driven by the motor shaft 623'.

Since the force transferring element 607" is connected to both wheels 605',605", two wheel-drive on the side of the container handling vehicle where the second pair of wheels 601c" of the second set of wheels 601c is arranged, is obtained.

Since both sides of the container handling vehicle 601 have two wheel-drive in the second direction Y, the container handling vehicle 601 has all-wheel drive (i.e. four-wheel drive in the illustrated embodiment) in the second direction Y.

Summarized, since the container handling vehicle 601 has two wheel drive on all four sides of the second section S2, all-wheel drive in both the first direction X and the second direction Y is obtained.

As shown in Fig. 6A, the container handling vehicle 601 is formed of a first chassis 650 for mounting of the first set of wheels 601b and a second chassis 660 for mounting of the second set of wheels 601c.

During movement forward in direction F, the weight shift of the container handling vehicle during acceleration and deceleration, is moved to the wheel 602" (and the wheel on the opposite side). The weight shift is typically in the range of 10-25%. Similarly, during movement backwards in direction B, the weight shift of the container handling vehicle 601, during acceleration and deceleration, is moved to the wheel 602' (and the wheel on the opposite side).

Shorter wheelbase, higher acceleration and higher centre of gravity COG will result in larger weight shifts. The wheels 602',602" will then have different acceleration potential:
A=u*g*% Acceleration potential = friction * 9.81* percentage of load on wheel 601',602".

By driving both wheels 601',602" on the same side via a common wheel motor (and the force transferring element 606'), a simple and energy efficient solution for motor and firmware control is obtained.

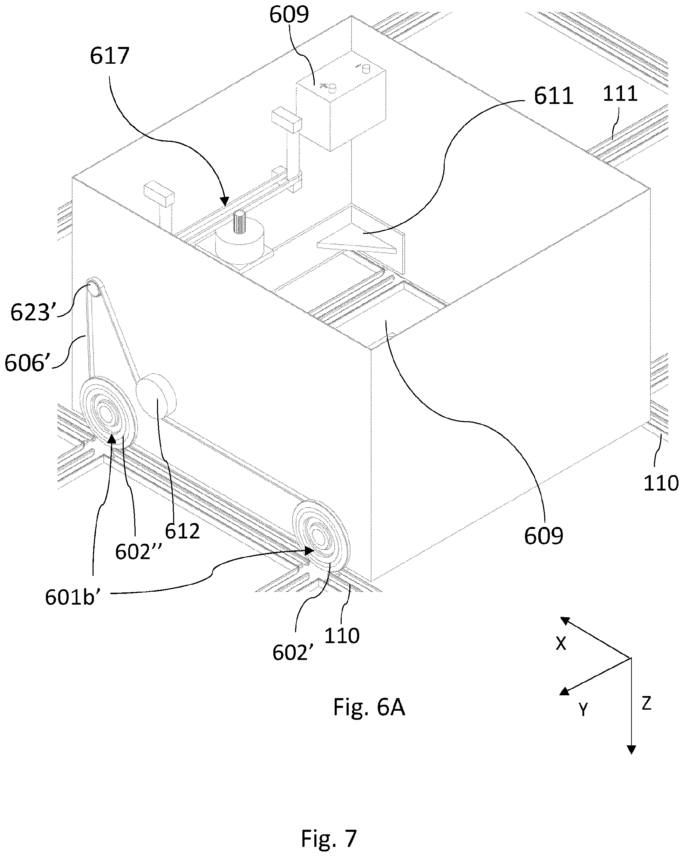

Fig. 7 shows an example of a first chassis 650 of the container handling vehicle 601 in Figs. 6A and 6B for driving in a first direction X on a rail system 108. The first set of wheels 601b (only the first pair of wheels 601b' shown in Fig. 7) is fixedly connected to the first chassis 650, i.e. the first set of wheels 601b follows any movement in the vertical direction of the first chassis 650. The first chassis 650 may have a reinforcement 611 where the wheels 602',602",603',603" are mounted. The first chassis 650 supports the power sources 609 and the wheel lift mechanism 617. The wheel assembly for the first pair of wheels 601b' of the first set of wheels 601b is shown on an outside of the first chassis 650. The force transferring element 606' connects the motor shaft 623' and the first and second wheels 602',602" of the first pair poof wheels 601b'. A tensioning pulley 612 for tensioning the force transferring element 606' is mounted to the first chassis 650. The tensioning pulley 612 is configured to adjust the tension in the force transferring element 606'.

Although not shown in Fig. 7, the first chassis 650 comprises a similar setup for the wheel assembly on the opposite side of the first chassis 650.

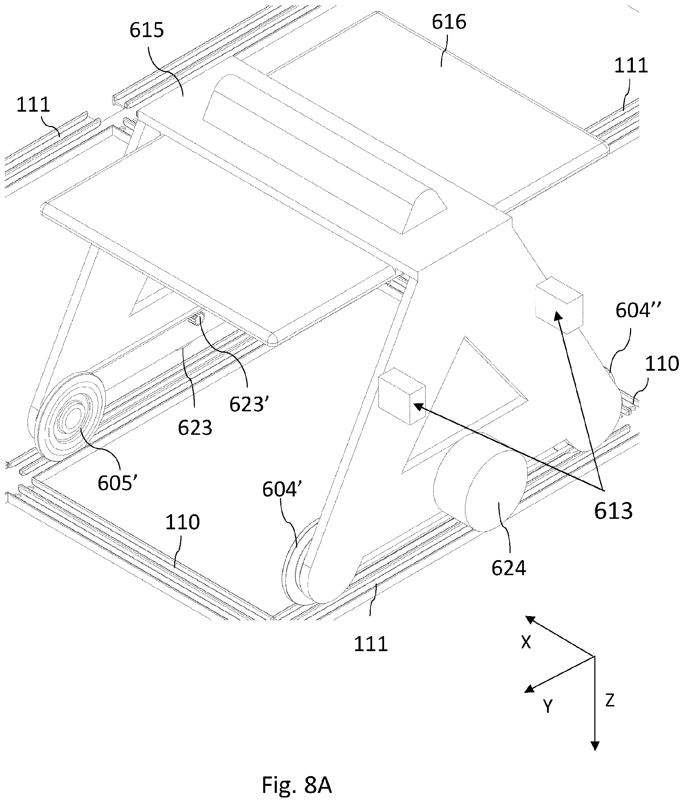

Fig. 8A shows an example of a second chassis 660 of the container handling vehicle 601 in Figs. 6A and 6B for driving in a second direction Y on a rail system 108. In Fig. 8A, the second chassis 660 is not carrying a storage container 106.

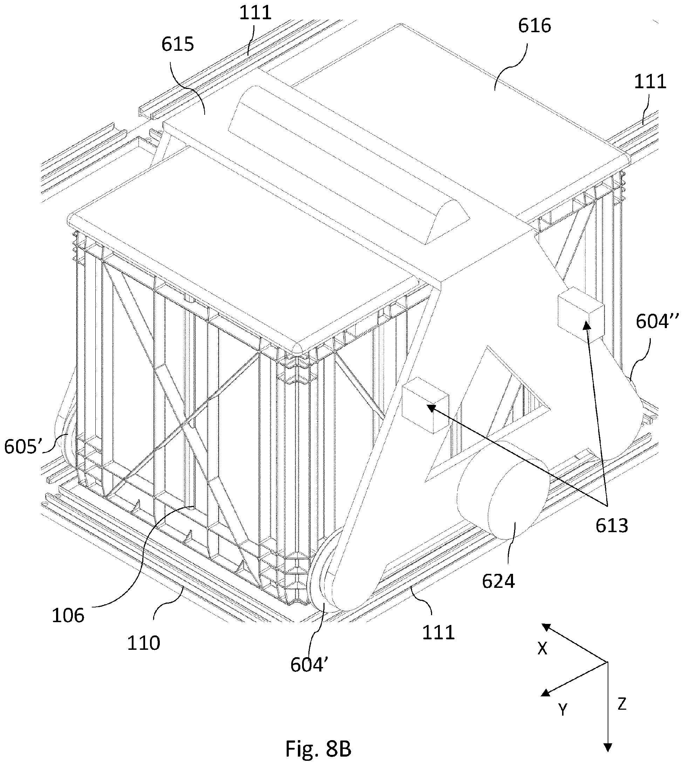

Fig. 8B shows an example of the second chassis 660 of the container handling vehicle 601 in Figs. 6A and 6B, when carrying a storage container 106. The second set of wheels 601c is fixedly connected to the second chassis 60, i.e. the second set of wheels 601c follows any movement in the vertical direction of the second chassis 660. The second chassis 660 is disclosed with an interface 613 for connection to the first chassis 650.

The relative sizes of the first chassis 650 relative to the second chassis 660 is such that the second chassis 660 is configured to be arranged inside the first chassis 650 (as illustrated e.g. in Fig. 6A). For this to be possible, the first chassis 650 has a longer extension in the first direction X (and in the second direction Y) than the second chassis 660. The respective first section S1 and the third section S3 are formed between the first chassis 650 and the second chassis 650.

The first chassis 650 and the second chassis 660 are movable relative to each other in a vertical direction.

Fig. 9A is a side perspective view of four wheel assemblies and respective wheel motors of a wheel motor arrangement of the container handling vehicle 601 in Figs. 6A and 6B.

Fig. 9B is a top view of Fig. 9A illustrating the positions of the wheel motors of the wheel motor arrangement in respective first and third sections of the container handling vehicle 601.

Many of the components have already been described in relation to Figs. 6-8 above, however Figs. 9A and 9B show some more details of the relative positions of the different wheel motors 621,622,623,624 and the force transferring elements 606',606",607',607". As is seen in Fig. 9A, the wheel motors 621,623 for driving the first and second pair of wheels 601b',601b" of the first set of wheels 601b are arranged at a higher elevation than the first and second pair of wheels 601c',601c" of the second set of wheels 601c. Although it would be advantageous to position the wheel motors 621,623 for driving the first and second pair of wheels 601b',601b" of the first set of wheels 601b at a lower position with regards to obtain a lower centre of gravity for the container handling vehicle 601, this is not possible because it would collide with one of the wheels 604" in the first pair of wheels 601c' of the second set of wheels 601c.

As seen in Figs. 9A and 9B the wheel motors 622,624 for driving the first and second pair of wheels 601b',601b" of the first set of wheels 601b are arranged diagonally relative to each other. Similarly, the wheel motors 621,623 for driving the first and second pair of wheels 601c',601c" of the second set of wheels 601c are arranged opposite each other. This positioning of the wheel motors for driving the respective pair of wheels are advantageous in terms of obtaining a favorable centre of gravity for the container handling vehicle 601 and hence the overall stability of the container handling vehicle 601.

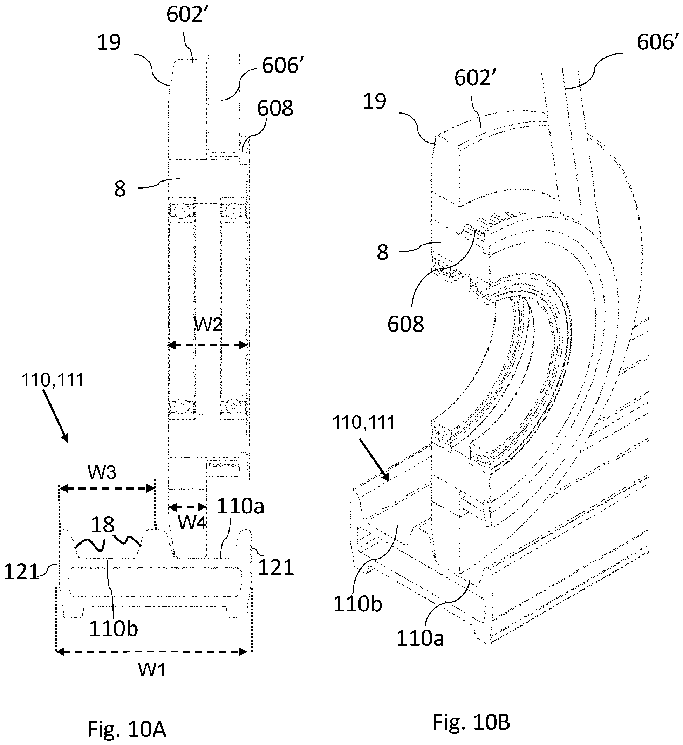

Fig. 10A is a side view, seen along a first direction of the rail system 108, of one wheel of a wheel assembly of a first pair of wheels 601b' of the first set of wheels 601b of the container handling vehicle 601 in Figs. 6A and 6B.

Fig. 10B is a side perspective view of the wheel assembly in Fig. 10A.

As shown in Fig. 10A, each rail 110 of the first set of rails has two sidewalls 121 defining a width W1 of the rail and comprises two parallel tracks 110a,110b. The parallel tracks 110a,110b are on an upper surface of the rails 110,111. Each track is defined by two opposite sidewalls 18. The tracks 110a,110b extend along the length of the rail 110,111.

The wheel assembly has a width W2 being equal to or smaller than half the width W1 of the rail 110. The width W2 is the total axial width of the wheel pulley 608 and a tyre of one of the wheels 602' in the wheel assembly. Furthermore, the axial width of the tyre and wheel width radially outwardly of the wheel pulley 608 on the wheel assembly is up to half the width W3 of the rail 110. That is, the wheel width occupies half the width and the wheel pulley occupies half the width of half the width of the rail.

The wheel pulley 608 is side-by-side with each of the wheels 602' in the pair of wheels and the force transferring element 606' is connected to the wheel pulley 608 of each of the wheels in a pair of wheels.

As such, at least the wheel assemblies which comprise the first and second pair of wheels of the second set of wheels are so narrow that they do not occupy any volume of the cavity nor any volume of a neighboring grid cell.

Optionally, such wheel assemblies may be used for the first and second pair of wheels in the first set of wheels as well, however that is not of equal importance as long as the wheel assemblies do not occupy any of the cavity since the wheel and/or force transferring element may extend into the respective first or third section instead.

The wheel 602' of the wheel assembly has a width W4 being equal to or smaller than half the width W3 of the track 110. The wheels 602' of the wheel assembly comprises an inclined side portion 19 for guidance by a respective inclined portion of one of the sidewalls 18 of the tracks.

The force transferring element 606',606",606‴,606ʺʺ is arranged within the width W2 of the wheel assembly.

According to an aspect, a container handling vehicle may be provided with a first chassis carrying wheels for movement in a first direction, a second chassis carrying wheels for movement in a second direction and a wheel lift mechanism, one chassis of said first and second chassis further carrying the wheel lift mechanism.

In the preceding description, various aspects of the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention as defined in the attached claims.

Examples of the present disclosure are set out in the following numbered clauses.
1. A container handling vehicle (601) for operation on a rail system (108) of an automated storage and retrieval system (1), the container handling vehicle (601) comprising:
   a first section (S1), a second section (S2) and a third section (S3) arranged in a line side-by-side, wherein the first section (S1) and the third section (S3) are arranged on opposite sides of the second section (S2);
   a first set of wheels (601b) for driving in a first direction (X) and a second set of wheels (6oic) for driving in a second direction (Y), the second direction (Y) being perpendicular to the first direction (X);
   wherein each of the first set of wheels (601b) and the second set of wheels (601c) comprises a first pair of wheels (601b',601c') and a second pair of wheels (601b",601c"), and wherein the first pair of wheels (601b',601c') and the second pair of wheels (601b",601c") of the first and second set of wheels, respectively, are arranged on opposite sides of the second section (S2), and each first and second pair of wheels (601b',601c',601b",601c") is driven by a respective force transferring element (606';606";607';607");
   wherein the container handling vehicle (601) comprises a wheel motor arrangement which comprises at least one wheel motor (621,622,623,624) arranged in the first section (S1), wherein each of the force transferring elements (606';606";607';607") is connected to the wheel motor arrangement.
2. The container handling vehicle (601) according to clause 1, wherein the second section (S2) comprises a cavity (610) and a lifting device (615) for lifting and lowering of a storage container (106) into the cavity (610).
3. The container handling vehicle (601) according to any of the preceding clauses, wherein the container handling (601) is formed of a first chassis (650) for mounting of the first set of wheels (601b) and a second chassis (660) for mounting of the second set of wheels (601c).
4. The container handling vehicle (601) according to clause 3, wherein the second chassis (660) is arranged inside the first chassis (650).
5. The container handling vehicle (601) according to clause 4, wherein the first chassis (650) has a longer extension in the first direction (X) than the second chassis (660), and wherein the respective first section (S1) and the third section (S3) are formed between the first chassis (650) and the second chassis (650).
6. The container handling vehicle (601) according to any of the preceding clauses 3-5, wherein the first chassis (650) and the second chassis (660) are movable relative to each other in a vertical direction.
7. The container handling vehicle (601) according to clause 6, comprising a wheel lift mechanism for lifting or lowering the first set of wheels or the second set of wheels relative the rail system, wherein the wheel lift mechanism (617) is connected to the first chassis (650) or the second chassis (660).
8. The container handling vehicle (601) according to any of the preceding clauses, wherein the wheel motor assembly comprises four wheel motors (621,622,623,624), wherein two of the wheel motors (621,623) are arranged in the first section (S1) and two of the wheel motors (622,624) are arranged in the third section (S3).
9. The container handling vehicle (601) according to clause 8, wherein the wheel motor (621) for driving the first pair of wheels (601b') of the first set of wheels (601b) comprises a motor shaft (621') and the wheel motor (623) for driving the first pair of wheels (601c') of the second set of wheels (601c) comprises a motor shaft (623'), wherein the motor shafts (621',623') are arranged perpendicular to each other.
10.The container handling vehicle (601) according to clause 9, wherein the motor shaft (621') for the wheel motor (621) which drives the first pair of wheels (601b') of the first set of wheels (601b) is connected to a side part of the first section (S1) and extends through the side part and to an outside of the first section (S1).
11. The container handling vehicle (601) according to clause 10, wherein one of the wheels (602") in the first pair of wheels (602b') of the first set of wheels is supported at the first section (S1) and another of the wheels (602') in the first pair of wheels (602b') of the first set of wheels is supported at the third section (S3), and wherein the force transferring element (606') driving the first pair of wheels (602b') of the first set of wheels is connected to the motor shaft (621') on the outside of the first section (S1).
12.The container handling vehicle (601) according to any of the preceding clauses, comprising a power source () for driving the wheel motor arrangement, wherein the power source (609) is arranged in the first section (S1) or in the third section (S3).
13.The container handling vehicle (601) according to any of the preceding clauses, wherein the first section (S1) has a footprint (F1), the second section (S2) has a footprint (F2), and wherein a size ratio of the footprint (F2) of the second section (S2) relative to the footprint (F1) of the first section (S1) is at least 2:1.
14.An automated storage and retrieval system (1) for storage containers (106), the storage system comprising a framework structure (100) and a container handling vehicle (601) according to any of the preceding clauses:
   wherein the framework structure comprises a rail system (108) having a first set of parallel rails (110) and a second set of parallel rails (111) arranged perpendicular to the first set of rails (110);
   the container handling vehicle (601) comprising at least two wheel assemblies, each of the wheel assemblies comprising one of the pair of wheels (601b',601b") and a wheel pulley (608) on each wheel of the pair of wheels for driving by the force transferring element (606';606");
   each rail (110,111) of the first set of rails has two sidewalls (121) defining a width (W1) of the rail and comprises two parallel tracks (110a,110b),
   wherein two adjacent rails of the first set of rails provide tracks for accommodating the first and second pair of wheels (601b',601b") of the first set of wheels; and wherein
   the wheel assembly has a width (W2) being equal to or smaller than half the width (W1) of the rail (110,111).
15. Method of operating a container handling vehicle (601) according to any of clauses 1-13 on an automated storage and retrieval system (1), wherein the method comprises the steps of:
   - operating at least one of the wheel motors (621,623) of the wheel motor arrangement for driving the respective force transferring elements (606',606") connected to the first and second pair of wheels (601b',601b") of the first set of wheels in the first direction (X), and
   - operating at least one of the wheel motors (622,624) of the wheel motor arrangement for driving the respective force transferring elements (607',607") connected to the first and second pair of wheels (601c',601c") of the second set of wheels in the second direction (X).

### LIST OF REFERENCE NUMBERS

| | |
|---|---|
| 1 | Prior art automated storage and retrieval system |
| 8 | Wheel rim |
| 12 | Grid column |
| 14 | Grid cell |
| 18 | Sidewall of track |
| 19 | Inclined side portion |
| 100 | Framework structure |
| 102 | Upright members |
| 104 | Grid |
| 105 | Storage column |
| 106 | Goods holder / Storage container / Bin |
| 106' | Goods holder / Storage container / Bin |
| 107 | Stack |
| 108 | Rail system |
| 110 | Parallel rails in first direction (X) |
| 110a,b | Track in first direction (X) |
| 111 | Parallel rails in second direction (Y) |
| 111a,b | Track in second direction (Y) |
| 112 | Access opening |
| 119 | First port column |
| 120 | Second port column |
| 121 | Sidewall of rail |
| 201 | Prior art container handling vehicle |
| 201a | Vehicle body of the container handling vehicle 201 |
| 201b | Drive means / wheel arrangement / first set of wheels in first direction (X) |
| 201c | Drive means / wheel arrangement/ second set of wheels in second direction (Y) |
| 301 | Prior art cantilever container handling vehicle |
| 301a | Vehicle body of the container handling vehicle 301 |
| 301b | Drive means / first set of wheels in first direction (X) |
| 301c | Drive means / second set of wheels in second direction (Y) |
| 304 | Gripping device |
| 401 | Prior art container handling vehicle |
| 401a | Vehicle body of the container handling vehicle 401 |
| 401b | Drive means / first set of wheels in first direction (X) |
| 401c | Drive means / second set of wheels in second direction (Y) |
| 404 | Gripping device |
| 500 | Control system |
| 601 | Container handling vehicle |
| 601a | Vehicle body of container handling vehicle 501 |
| 601b | First set of wheels in first direction (X) |
| 601b' | First pair of wheels of first set of wheels |
| 601b" | Second pair of wheels of first set of wheels |
| 601c' | First pair of wheels of second set of wheels |
| 601c" | Second pair of wheels of second set of wheels |
| 602' | First wheel of first pair of wheels 601b' |
| 602" | Second wheel of first pair of wheels 601b' |
| 603' | First wheel of second pair of wheels 601b" |
| 603" | Second wheel of second pair of wheels 601b" |
| 604' | First wheel of first pair of wheels 601c' |
| 604" | Second wheel of first pair of wheels 601c' |
| 605' | First wheel of second pair of wheels 601c" |
| 605" | Second wheel of second pair of wheels 601c" |
| 606' | Force transferring element of first pair of wheels of first set of wheels |
| 606" | Force transferring element of second pair of wheels of first set of wheels |
| 607' | Force transferring element of first pair of wheels of second set of wheels |
| 607" | Force transferring element of second pair of wheels of second set of wheels |
| 608 | Wheel pulley |
| 609 | Power source / battery |
| 610 | Cavity |
| 611 | Reinforcement for wheels |
| 612 | Tensioning pulley |
| 613 | Interface for connection to first chassis |
| 615 | Lifting device |
| 616 | Lifting frame |
| 617 | Wheel lift mechanism |
| 621 | Wheel motor for driving first pair of wheels of first set of wheels |
| 621' | Motor shaft of wheel motor 621 |
| 622 | Wheel motor for driving second pair of wheels of first set of wheels |
| 622' | Motor shaft of wheel motor 622 |
| 623 | Wheel motor for driving first pair of wheels of second set of wheels |
| 623' | Motor shaft of wheel motor 623 |
| 624 | Wheel motor for driving second pair of wheels of second set of wheels |
| 624' | Motor shaft of wheel motor 624 |
| 650 | First chassis |
| 660 | Second chassis |
| F | Direction F |
| B | Direction B |
| F1 | Footprint of first section S1 |
| F2 | Footprint of second section S2 |
| F3 | Footprint of third section S3 |
| L_{c} | Length grid cell |
| Lₒ | Length access opening |
| W_{c} | Width of grid cell |
| Wₒ | Width of access opening |
| W₁ | Width of rail |
| W₂ | Width of wheel assembly |
| W₃ | Width of track |
| W₄ | Width of wheel |
| *X* | First direction |
| *Y* | Second direction |
| *Z* | Third direction |

## Claims

1. A container handling vehicle (601) for operation on a rail system (108) of an automated storage and retrieval system (1), the container handling vehicle (601) comprising:
a first set of wheels (601b) for driving in a first direction (X) and a second set of wheels (6oic) for driving in a second direction (Y);
wherein each of the first set of wheels (601b) and the second set of wheels (601c) comprises a respective first pair of wheels (601b',601c') on a common side of the vehicle and a respective second pair of wheels (601b",601c") on a common side of the vehicle, and each pair of wheels (601b',601c',601b",601c") is driven by a respective common force transferring element (606';606";607';607");
wherein the container handling vehicle (601) comprises a wheel motor arrangement and wherein each of the force transferring elements (606';606";607';607") is connected to the wheel motor arrangement.

2. The container handling vehicle (601) according to claim 1, further comprising a first section (S1), a second section (S2) and a third section (S3) arranged in a line side-by-side, wherein the first section (S1) and the third section (S3) are arranged on opposite sides of the second section (S2); optionally the second direction (Y) being perpendicular to the first direction (X); optionally wherein the first pair of wheels (601b',601c') and the second pair of wheels (601b",601c") of the first and second set of wheels, respectively, are arranged on opposite sides of the second section (S2), and which optionally comprises at least one wheel motor (621,622,623,624) arranged in the first section (S1).

3. The container handling vehicle (601) according to claim 2, wherein the second section (S2) comprises a cavity (610) and a lifting device (615) for lifting and lowering of a storage container (106) into the cavity (610).

4. The container handling vehicle (601) according to any of the preceding claims, wherein the container handling (601) is formed of a first chassis (650) for mounting of the first set of wheels (601b) and a second chassis (660) for mounting of the second set of wheels (601c), optionally wherein the second chassis (660) is arranged inside the first chassis (650).

5. The container handling vehicle (601) according to claim 4, wherein the first chassis (650) has a longer extension in the first direction (X) than the second chassis (660), and wherein the respective first section (S1) and the third section (S3) are formed between the first chassis (650) and the second chassis (650).

6. The container handling vehicle (601) according to any of the preceding claims 3-5, wherein the first chassis (650) and the second chassis (660) are movable relative to each other in a vertical direction.

7. The container handling vehicle (601) according to claim 6, comprising a wheel lift mechanism for lifting or lowering the first set of wheels or the second set of wheels relative the rail system, wherein the wheel lift mechanism (617) is connected to the first chassis (650) or the second chassis (660).

8. The container handling vehicle (601) according to any of the preceding claims, wherein the wheel motor assembly comprises four wheel motors (621,622,623,624), wherein two of the wheel motors (621,623) are arranged in the first section (S1) and two of the wheel motors (622,624) are arranged in the third section (S3), optionally wherein the wheel motor (621) for driving the first pair of wheels (601b') of the first set of wheels (601b) comprises a motor shaft (621') and the wheel motor (623) for driving the first pair of wheels (601c') of the second set of wheels (601c) comprises a motor shaft (623'), wherein the motor shafts (621',623') are arranged perpendicular to each other.

9. The container handling vehicle (601) according to claim 9, wherein the motor shaft (621') for the wheel motor (621) which drives the first pair of wheels (601b') of the first set of wheels (601b) is connected to a side part of the first section (S1) and extends through the side part and to an outside of the first section (S1). optionally wherein one of the wheels (602") in the first pair of wheels (602b') of the first set of wheels is supported at the first section (S1) and another of the wheels (602') in the first pair of wheels (602b') of the first set of wheels is supported at the third section (S3), and wherein the force transferring element (606') driving the first pair of wheels (602b') of the first set of wheels is connected to the motor shaft (621') on the outside of the first section (S1).

10. The container handling vehicle (601) according to any of the preceding claims, comprising a power source () for driving the wheel motor arrangement, wherein the power source (609) is arranged in the first section (S1) or in the third section (S3).

11. The container handling vehicle (601) according to any of the preceding claims, wherein the first section (S1) has a footprint (F1), the second section (S2) has a footprint (F2), and wherein a size ratio of the footprint (F2) of the second section (S2) relative to the footprint (F1) of the first section (S1) is at least 2:1.

12. An automated storage and retrieval system (1) for storage containers (106), the storage system comprising a framework structure (100) and a container handling vehicle (601) according to any of the preceding claims.

13. The automated storage and retrieval system of claim 12 wherein the framework structure comprises a rail system (108) havs a first set of parallel rails (110) and a second set of parallel rails (111) arranged perpendicular to the first set of rails (110); the container handling vehicle (601) comprising at least two wheel assemblies, each of the wheel assemblies comprising one of the pair of wheels (601b',601b") and a wheel pulley (608) on each wheel of the pair of wheels for driving by the force transferring element (606';606"); optionally each rail (110,111) of the first set of rails has two sidewalls (121) defining a width (W1) of the rail and comprises two parallel tracks (110a,110b), wherein two adjacent rails of the first set of rails provide tracks for accommodating the first and second pair of wheels (601b',601b") of the first set of wheels; and optionally wherein the wheel assembly has a width (W2) being equal to or smaller than half the width (W1) of the rail (110,111).

14. Method of operating a container handling vehicle (601) according to any of claims 1-11 on an automated storage and retrieval system (1), wherein the method comprises the steps of:
- operating at least one of the wheel motors (621,623) of the wheel motor arrangement for driving the respective force transferring elements (606',606") connected to the first and second pair of wheels (601b',601b") of the first set of wheels in the first direction (X), and
- operating at least one of the wheel motors (622,624) of the wheel motor arrangement for driving the respective force transferring elements (607',607") connected to the first and second pair of wheels (601C',601C") of the second set of wheels in the second direction (X).
